# FASCICULE DE BREVET EUROPEEN

(11) **EP 0 401 164 B1**
(45) Date de publication et mention de la délivrance du brevet: **09.02.1994**
(21) Numéro de dépôt: 90810375.7
(22) Date de dépôt: 23.05.1990
(51) Int. Cl.: C23C 8/20, G01N 27/12

(54) **Procédé de contrôle d'un traitement thermique avec pénétration de carbone**
Verfahren zum Kontrollieren einer thermischen Behandlung mit C-Diffusion
Method for controlling a thermal treatment with carbon diffusion

(30) Priorité: 01.06.1989 CH 2059/89
(43) Date de publication de la demande: 05.12.1990
(73) Titulaire: Beuret, Pierre, CH-2900 Porrentruy (CH)
(72) Inventeur: Beuret, Pierre, CH-2900 Porrentruy (CH)
(74) Mandataire: Fischer, Franz Josef

(56) Documents cités:
- US-A- 2 935 866
- US-A- 3 843 419
- HÄRTEREI TECHNISCHE MITTEILUNGEN, vol. 40, no. 3, mai-juin 1985, pages 104-106, Munich, DE; J. WÜNNING: "Die C-stromregelung als Ergänzung oder Ersatz für die C-Pegelregelung bei der Gasaufkohlung"

## Description

La présente invention a pour objet un procédé de contrôle d'un traitement thermique avec pénétration de carbone effectué sur des pièces placées dans un four, ainsi qu'une sonde pour la mise en oeuvre de ce procédé.

Les différents développements effectués ces dernières années dans les techniques de cémentation gazeuse ont essentiellement porté sur la réduction des temps de cycle, la qualité et la reproductibilité des traitements, ainsi que sur la consommation gazeuse et l'amélioration des conditions de sécurité.

Ces recherches ont conduit à des atmosphères sursaturantes, souvent hors d'équilibre, mises en oeuvre dans des réacteurs agités, utilisés à la pression atmosphérique ou sous pression partielle d'hydrocarbures dans un four à vide.

Les valeurs du potentiel carbone effectuées en mesure indirecte, à partir de gaz résiduels tels que H₂O, CO₂ ou O₂ ne peuvent plus être valablement définies.

En traitement sous vide ou en atmosphère sursaturante, dont la libération du carbone ne passe pas par le cracking de la molécule de CO, mais par la décomposition directe d'un hydrocarbure, la notion de potentiel d'équilibre n'existe plus et pourrait être remplacée par le terme de potentiel cinétique:
c'est-à-dire un enrichissement suivant une loi linéaire (dans le domaine usuel de la cémentation) en fonction du temps.

La méthode de contrôle et de régulation parfaitement adaptée au suivi de ces réactions est la mesure en direct du flux de carbone.

Le principe consiste à suivre en temps réel le carbone qui rentre à la surface de l'élément de mesure, soit en prise de poids (système de thermo-balance ou du feuillard), soit par analyse gazeuse après réaction secondaire du carbone avec un gaz dans un système isolé par rapport au réacteur ou par la mesure de la résistance d'un capteur en fonction de son enrichissement en carbone.

Le premier principe, établi sur la prise de masse d'un élément, peut difficilement être utilisé dans un réacteur industriel, car la balance électronique est très sensible aux chocs et vibrations. Quant à la mesure sur clinquant, les valeurs ne sont que ponctuelles et significatives d'un état pendant une courte période.

La deuxième méthode mise au point par Meyer et Schmidt consiste à utiliser une sonde à flux de carbone dans laquelle le carbone diffuse depuis l'atmosphère du four dans un tube en acier à parois minces: à l'intérieur du tube circule une atmosphère décarburante à base de N₂ et H₂ humides. Le flux de carbone est déterminé à partir de la teneur de cette atmosphère en CO/CO₂ (voir par exemple US-3,843,419).

Le principal inconvénient de ce système réside dans le fait que l'analyse ne se fait pas in situ et que la chaîne de mesure basée sur des analyseurs infra-rouge devient complexe et imprécise.

L'autre système développé par M. Wünning, utilise la méthode par résistance: un capteur en forme de fil très fin et court s'enrichit dans l'atmosphère du four et la mesure de sa résistance électrique donne une indication sur sa teneur en carbone donc sur le flux de carbone en fonction du temps. A intervalles réguliers la sonde est décarburée par une injection de H₂, H₂O et N₂ autour du capteur. (J. Wünning: Die C-Stromregelung bei der Gasaufkohlung.) HTM 40 (1985.3)

Cette technologie n'est pas utilisable dans un réacteur sous vide, car l'introduction de gaz décarburant déplace les réactions gazeuses, affaiblit les cinétiques d'enrichissement, provoque une oxydation intergranulaire à la surface des pièces et remonte la pression de travail.

Il faut également noter la fragilité du fil et sa complexité de montage après rupture (pour soudage).

Le brevet US-2,935,866 (Schmidt and Wünning) décrit aussi une méthode de mesure utilisant la résistance électrique de conducteurs. Dans ce cas, deux capteurs sont mis en présence l'un d'une atmosphère à teneur en C connue et l'autre de l'atmosphère à mesurer.

La présente invention vise à proposer un procédé qui évite ces inconvénients. Le principe de cette invention consiste à utiliser un capteur tubulaire dans lequel circule une atmosphère décarburante à base de N₂, H₂, H₂O, CO₂. Ce tube étant placé en partie dans l'atmosphère du four et sa paroi étant très fine, le carbone diffuse à travers et se combine à H₂O pour être évacué du système.

Le flux de carbone est mesuré par la variation de résistivité du capteur. En connaissant le débit gazeux, la longueur et la surface du capteur, la mesure de cette résistance permet une analyse en continu et les avantages sont multiples:
- possibilité de travailler dans des réacteurs sous vide et dans une atmosphère gazeuse d'oxydo-réduction;
- méthode d'analyse continue et précise car elle se fait dans le réacteur;
- interchangeabilité facile (par des électrodes);
- fiabilité et souplesse d'utilisation;
- analyse basée sur un signal électrique sans traitement faisant intervenir des mesures infra-rouge;
- pilotage aisé d'une installation à partir de ce système;
- temps de réponse rapide.

Ainsi l'objet principal de l'invention est un procédé de contrôle d'un traitement thermique avec pénétration de carbone, effectué sur des pièces placées dans un four, comportant l'utilisation d'une sonde pour la mesure de la résistance électrique d'un conducteur mis en présence de l'atmosphère du four, et le traitement des valeurs de résistance obtenues successivement par ces mesures, caractérisé en ce qu'on utilise un conducteur de forme tubulaire, on met une des faces d'un segment du conducteur en contact avec l'atmosphère du four et on raccorde l'espace avoisinant l'autre face dudit segment à une alimentation en gaz réducteur.

On va décrire ci-après, à titre d'exemple, une forme de mise en oeuvre du procédé ainsi qu'une sonde qui constitue une forme d'exécution de l'objet secondaire de l'invention. Pour cela on se réfèrera aux dessins annexés dont:
la fig. 1 est une vue schématique d'une sonde selon l'état antérieur de la technique;
la fig. 2 est un graphique illustrant le fonctionnement de la sonde de la fig. 1;
la fig. 3 est une vue schématique d'un four équipé d'une sonde selon l'invention et permettant la mise en oeuvre du procédé décrit;
la fig. 4 est une vue en coupe à plus grande échelle de la sonde représentée à la fig. 3;
la fig. 5 est une vue schématique en coupe à échelle encore plus grande permettant d'expliquer le déroulement du procédé et représentant un segment du conducteur tubulaire visible à la figure 4;
la fig. 6 est une vue schématique montrant en coupe un segment de la paroi du conducteur tubulaire;
et la fig. 7 est un graphique montrant l'évolution de la teneur en carbone dans la zone superficielle des pièces placées dans le four de la fig. 3.

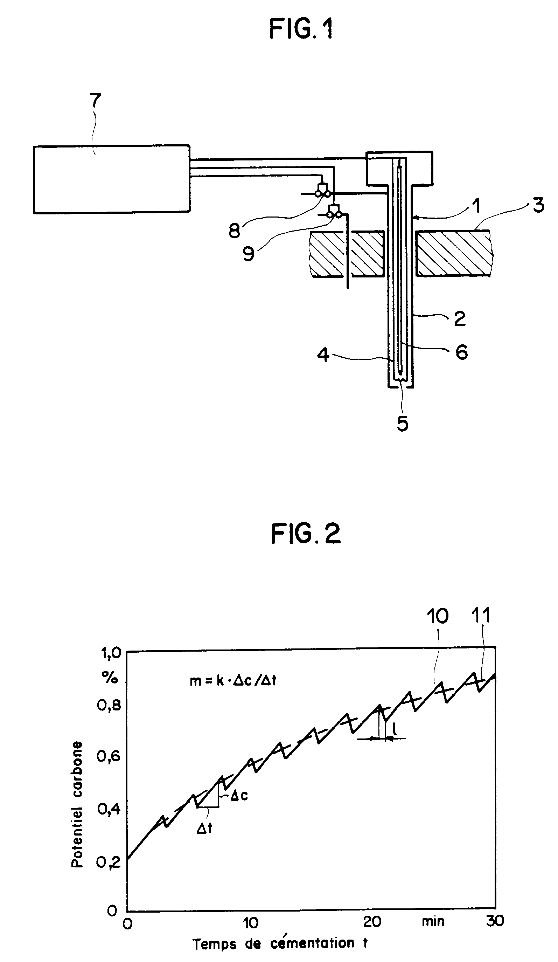

Les figures 1 et 2 illustrent le procédé connu de contrôle d'un traitement thermique de cémentation développé par M. Wünning et dont il a été question au début. La sonde 1 comporte à l'intérieur d'une enveloppe 2 qui traverse la paroi 3 du four un fil 4 de métal ferreux en forme de U et dont le coude constitue une résistance 5. Elle comporte encore un thermo-couple de mesure de température 6. Un centre de calcul 7 est conçu de façon à commander l'envoi d'un courant dans la résistance 5, à mesurer périodiquement la valeur de cette résistance, à commander également par une vanne 8 une alimentation de gaz de décarburation dans l'espace compris à l'intérieur de l'enveloppe 2 et à commander finalement par une vanne 9 le flux de gaz de cémentation qui pénètre dans le four.

On a développé pour la mise en oeuvre de ce procédé un programme de calcul basé sur les valeurs de résistance mesurées sur le segment 5 du fil 4. Comme ce segment de fil placé dans le four a tendance à se saturer en carbone rapidement alors que la teneur en carbone de la zone superficielle des pièces à cémenter augmente progressivement au fur et à mesure que le carbone diffuse à l'intérieur des pièces, le procédé connu consiste à décarburer périodiquement le fil 4 de telle manière que la teneur en carbone de ce fil ait en fonction du temps l'allure de la courbe en zig zag 10 (fig. 2) alors que la teneur en carbone de la zone superficielle des pièces suit l'allure représentée par la courbe 11. Les intervalles de temps durant lesquels la décarburation est effectuée sont désignés par "l" à la fig. 2.

Comme on le voit, la décarburation du fil 4 nécessite l'introduction du gaz décarburant à l'intérieur du four, de sorte que cette technologie n'est pas utilisable dans un réacteur sous vide et présente des inconvénients même lorsque l'atmosphère du four est en pression.

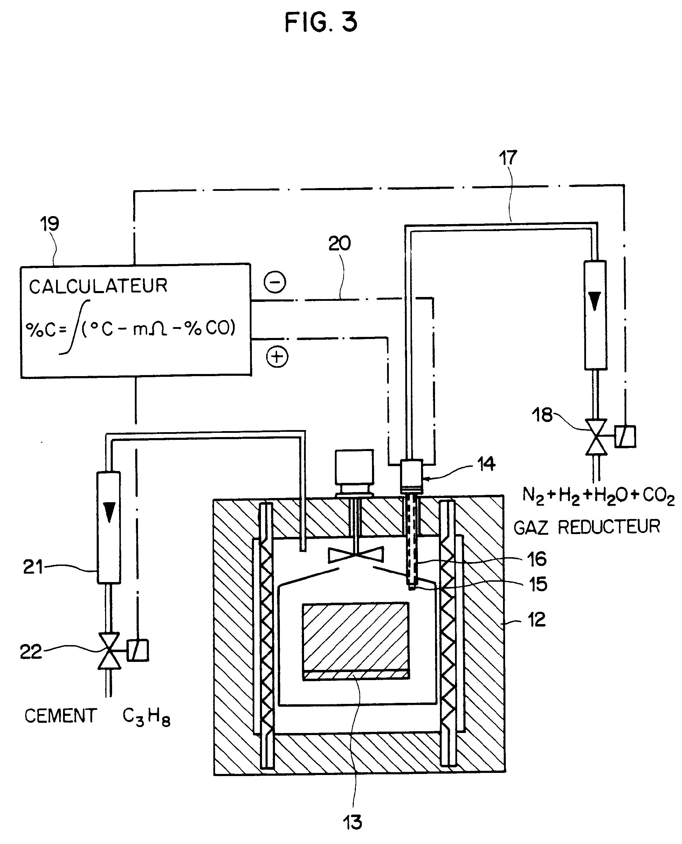

La figure 3 illustre donc de façon générale l'agencement qui permet la mise en oeuvre du procédé décrit ci-après. Le four 12 contient une charge de pièces à cémenter désignée par 13. La sonde 14 comporte un capteur qui est constitué par un conducteur électrique tubulaire 15 disposé en forme de U à l'intérieur d'un manchon de support 16. Les deux extrémités du conducteur tubulaire 15 sont raccordées à des tuyaux d'alimentation et d'évacuation 17 permettant la circulation dans le conducteur d'un gaz réducteur. Cette circulation est commandée par une ou plusieurs vannes 18, commandées elles-mêmes à partir du centre de commande 19. Ce centre de commande assure aussi la circulation d'un courant électrique dans le conducteur tubulaire par le circuit 20 ainsi que la mesure de la résistance électrique du conducteur.

Le dispositif d'alimentation 21, commandé par une vanne 22, permet l'introduction du gaz de cémentation dans le four 12.

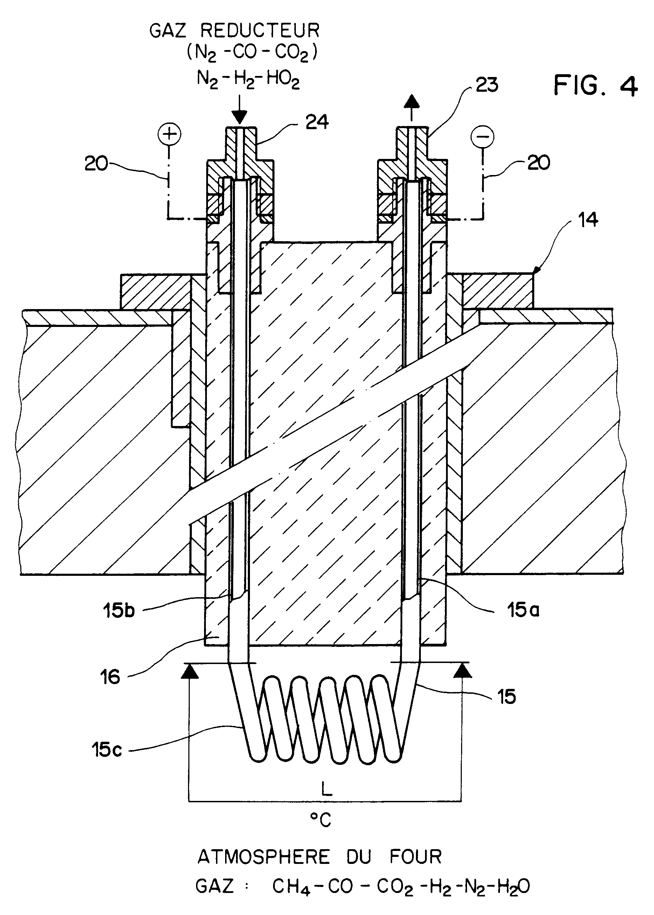

La fig. 4 montre plus en détail la constitution de la sonde 14. Le conducteur tubulaire 15 comporte deux branches 15a et 15b qui s'étendent parallèlement à l'intérieur du manchon 16 qui est une pièce servant à la fois de support, d'isolant électrique et thermique et de protection pour le conducteur 15. Un court segment 15c du conducteur 15, de longueur L, est exposé à l'atmosphère du four et constitue le capteur proprement dit. Ce court segment est, dans la forme d'exécution décrite ici, enroulé sur lui-même en forme de solénoïde. Il pourrait aussi être disposé selon une ligne en serpentine ou tout autre tracé offrant une grande surface au contact de l'atmosphère du four pour un faible encombrement et une circulation non entravée. Le métal dont le conducteur 15 est constitué est un métal ferreux de composition telle que la mesure de sa résistance électrique permet de déterminer la teneur en carbone moyenne dans l'épaisseur de la paroi du conducteur. L'épaisseur de cette paroi sera suffisament réduite, par exemple environ 0.1 mm, pour que le carbone puisse diffuser rapidement à travers la paroi afin qu'un état d'équilibre dynamique puisse être réalisé facilement comme on le verra plus loin.

De préférence les deux branches 15a et 15b du conducteur tubulaire 15 seront cuivrées extérieurement afin de réduire au minimum la chute de tension et la modification de résistance entre les extrémités des deux branches 15a et 15b et le segment 15c. Ces deux extrémités sont en effet connectées à l'extérieur du four, d'une part à des raccords 23 et 24 qui sont reliés eux-mêmes au circuit de gaz réducteur 17, et d'autre part électriquement au circuit 20.

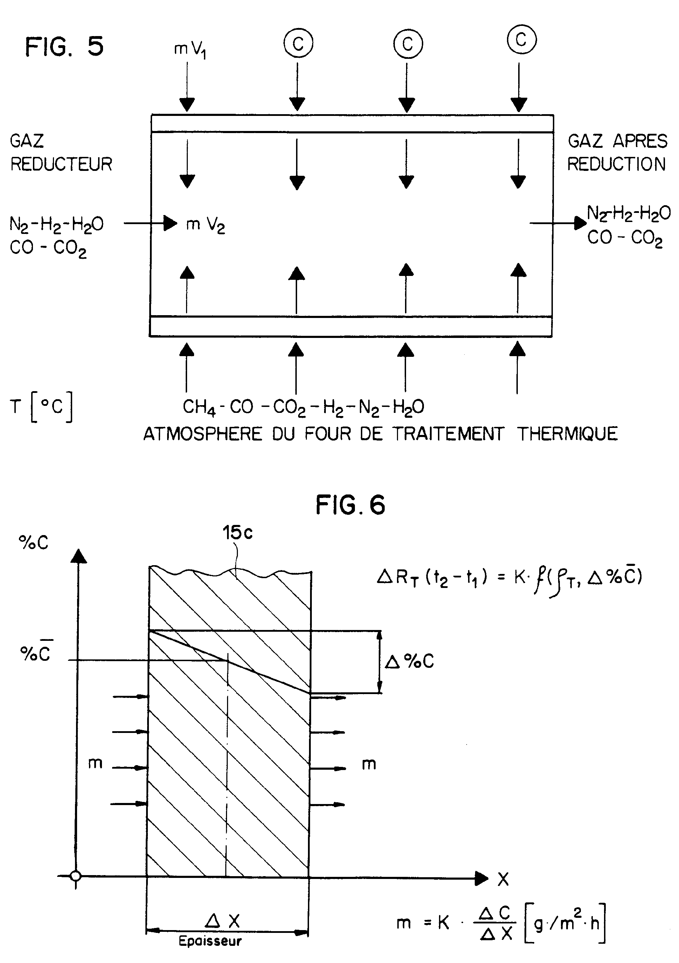

Le procédé décrit peut être mis en oeuvre au cours de l'opération de cémentation soit de façon continue, soit de manière intermittente. Les figures 5 et 6 illustrent le phénomène qu'il s'agit de contrôler et donnent les grandeurs physiques dont les valeurs doivent être traitées par l'ordinateur. A la fig. 5 on a représenté un court segment tubulaire qui représente une partie du conducteur 15 avec sa paroi mince de forme cylindrique. Si la surface extérieure de ce segment tubulaire est exposée à une atmosphère carburante à une température déterminée T, le carbone pénètre dans le métal du conducteur et la quantité de carbone qui est apportée est représentée par l'expression mV₁. Ce carbone diffuse à travers la paroi et, comme l'espace intérieur du conducteur tubulaire se trouve en présence d'un gaz réducteur qui circule dans la longueur du conducteur, ce gaz évacue le carbone, la quantité de carbone évacuée étant représentée par l'expression mV₂.

La fig. 6 illustre la situation d'équilibre qui s'établit ainsi. Sur le graphique on a représenté en ordonnée la teneur en carbone et en abscisse la distance à travers la paroi du conducteur 15c. La teneur en carbone sur la face extérieure de cette paroi est supérieure à sa valeur sur la face intérieure et la différence Δ%C correspond à un transfert de masse de carbone m (gramme par mètre carré et par heure).

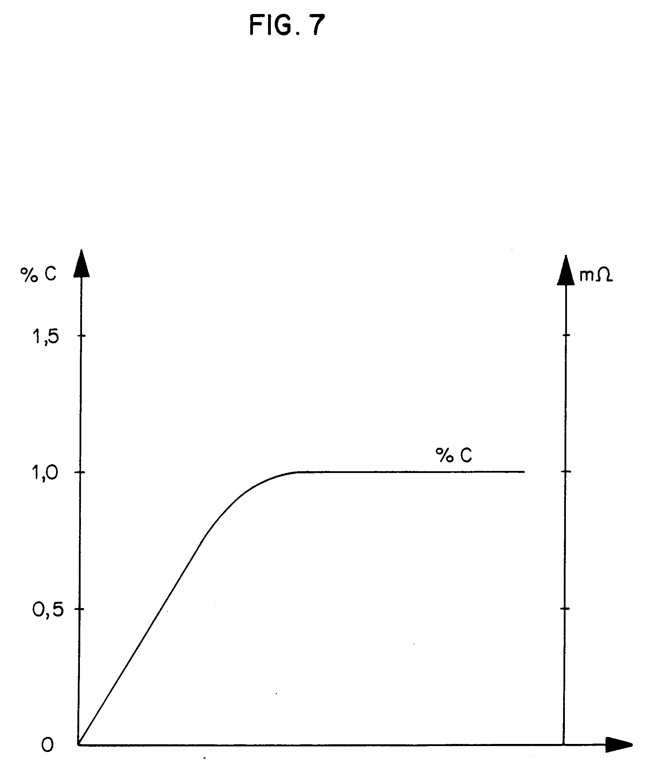

La valeur de la résistance du segment de conducteur 15c dépend de la température T, de la longueur L, de l'épaisseur ΔX, et du coefficient de résistivité qui dépend lui-même de la teneur en carbone. Ainsi la valeur de la résistance à un instant quelconque t permet de déterminer à cet instant la teneur moyenne %C du carbone dans la paroi du conducteur 15c et l'évolution au cours du temps de cette valeur en tenant compte des débits de gaz carburant et de gaz réducteur mV₁ et mV₂. Elle permet de déterminer le degré d'évolution du phénomène de pénétration de carbone dans les pièces et par conséquent de suivre leur carburation telle qu'elle est représentée par la fig. 7.

Lorsque les conditions d'équilibre sont réalisées, l'espace intérieur du tube comporte un potentiel carbone constant. Un flux constant de carbone est absorbé par le débit constant du gaz réducteur.

## Revendications

1. Procédé de contrôle d'un traitement thermique avec pénétration de carbone, effectué sur des pièces placées dans un four, comportant l'utilisation d'une sonde pour la mesure de la résistance électrique d'un conducteur mis en présence de l'atmosphère du four, et le traitement des valeurs de résistance obtenues successivement par ces mesures, caractérisé en ce qu'on utilise un conducteur de forme tubulaire, on met une des faces d'un segment du conducteur en contact avec l'atmosphère du four et on raccorde l'espace avoisinant l'autre face dudit segment à une alimentation en gaz réducteur.

2. Procédé selon la revendication 1, caractérisé en ce qu'on place la face extérieure du conducteur tubulaire en présence de l'atmosphère du four et on raccorde l'intérieur de ce conducteur à une alimentation en gaz de décarburation.

3. Procédé selon la revendication 1 ou la revendication 2, caractérisé en ce qu'on donne à l'épaisseur de la paroi du dit segment de conducteur tubulaire une valeur suffisament faible pour que le carbone diffuse à travers cette paroi et soit évacué par le gaz réducteur.

4. Procédé selon la revendication 1, caractérisé en ce qu'on utilise comme gaz réducteur un mélange contenant N₂ et au moins un des composants H₂, H₂O, CO₂.

5. Procédé selon l'une quelconque des revendications 1 à 4, caractérisé en ce qu'il se déroule en continu, la décarburation du conducteur par un flux de gaz réducteur se déroulant de manière permanente, avec réglage de ce flux de gaz.

6. Procédé selon l'une quelconque des revendications 1 à 4, caractérisé en ce qu'il se déroule cycliquement, un flux de gaz réducteur étant commandé de façon à effectuer une décarburation de la paroi du conducteur tubulaire durant des périodes de durée limitée, se succédant par intermittence.

7. Sonde pour la mise en oeuvre du procédé selon l'une quelconque des revendications 1 à 6, caractérisée par un capteur tubulaire en un métal ferreux présentant une forme en U, dont les deux extrémités traversent un noyau en matière isolante et sont connectées d'une part électriquement à une source de tension par une liaison qui traverse un instrument de mesure de la résistance électrique et d'autre part, du point de vue de l'écoulement des fluides, à une alimentation et à une évacuation de gaz réducteur.

8. Sonde selon la revendication 7, caractérisée en ce que les deux branches du conducteur tubulaire en forme de U sont enrobées dans un manchon en matière isolante et protectrice, le coude du U étant constitué par un segment de conducteur en forme de serpentin ou de solénoïde qui est exposé à l'atmosphère du four.

9. Sonde selon la revendication 7, caractérisée en ce que les deux branches du conducteur tubulaire en forme de U sont revêtues extérieurement d'une couche de cuivre, à l'intérieur du manchon en matière isolante.

## Patentansprüche

1. Verfahren zur Ueberwachung einer thermischen Behandlung mit Kohlenstoffdiffusion, angewendet auf in einem Ofen befindlichen Werkstücken, welches die Verwendung einer Sonde zur Messung des elektrischen Widerstandes eines in die Ofenatmosphäre verbrachten Leiters und die Verarbeitung der laufend durch diese Messungen erhaltenen Widerstandswerte umfasst, dadurch gekennzeichnet, dass ein röhrenförmiger Leiter verwendet wird, dass eine der Seiten des Leitersegments in Kontakt mit der Ofenatmosphäre gebracht wird und dass der Raum, der an die andere Seite des genannten Segments angrenzt, mit einer Reduktionsgaszufuhr verbunden wird.

2. Verfahren nach Anspruch 1, dadurch gekennzeichnet, dass die Aussenseite des röhrenförmigen Leiters in Kontakt mit der Ofenatmosphäre gebracht wird und das Innere dieses Leiters mit einer Entkohlungsgas-Zufuhr verbunden wird.

3. Verfahren nach Anspruch 1 oder 2, dadurch gekennzeichnet, dass für die Wandstärke des genannten Segments des röhrenförmigen Leiters ein so niedriger Wert gewählt wird, dass der Kohlenstoff durch diese Wand diffundiert und durch das Reduktionsgas abgeführt wird.

4. Verfahren nach Anspruch 1, dadurch gekennzeichnet, dass als Reduktionsgas ein Gemisch verwendet wird, das N₂ und mindestens einen der Bestandteile H₂, H₂O oder CO₂ enthält.

5. Verfahren nach wenigstens einem der Ansprüche 1 bis 4, dadurch gekennzeichnet, dass es kontinuierlich abläuft, wobei die Entkohlung des Leiters durch einen Reduktionsgasstrom permanent vor sich geht und dieser Gasstrom geregelt wird.

6. Verfahren nach wenigstens einem der Ansprüche 1 bis 4, dadurch gekennzeichnet, dass es zyklisch abläuft, wobei ein Reduktionsgasstrom so gesteuert wird, dass eine Entkohlung der Wand des röhrenförmigen Leiters während Perioden von begrenzter Dauer erfolgt, welche in Intervallen aufeinander folgen.

7. Sonde für die Durchführung des Verfahrens nach wenigstem einem der Ansprüche 1 bis 6, gekennzeichnet durch einen röhrenförmigen Fühler aus einem Eisenmetall in U-Form, dessen beide Enden einen Kern aus isolierendem Material durchqueren und die einerseits elektrisch über eine Verbindung, die ein Instrument zur Messung des elektrischen Widerstandes durchquert, an eine Spannungsquelle und andererseits, im Hinblick auf den Gasfluss, an eine Reduktionsgaszufuhr und eine Reduktionsgasabfuhr angeschlossen sind.

8. Sonde nach Anspruch 7, dadurch gekennzeichnet, dass die beiden Schenkel des röhrenförmigen Leiters in U-Form von einer Muffe aus isolierendem und schützendem Material umgeben sind, wobei die Biegung des U aus einem Leitersegment in Form einer Spirale oder eines Solenoids besteht, welches der Ofenatmosphäre ausgesetzt ist.

9. Sonde nach Anspruch 7, dadurch gekennzeichnet, dass die beiden Schenkel des röhrenförmigen Leiters in U-Form im Innern der Muffe aus isolierendem Material aussen mit einer Kupferschicht bedeckt sind.

## Claims

1. A method of monitoring a heat treatment with carbon penetration, carried out on workpieces placed in a furnace, comprising the use of a probe for measuring the electrical resistance of a conductor placed in the presence of the atmosphere of the furnace, and the processing of the resistance values successively obtained by these measurements, wherein a tubular conductor is used, one of the faces of a segment of the conductor is placed in contact with the atmosphere of the furnace, and the space adjoining the other face of the segment is connected to a supply of reducing gas.

2. The method of claim 1, wherein the outside face of the tubular conductor is placed in the presence of the atmosphere of the furnace and the interior of the tubular conductor is connected to a supply of decarburizing gas.

3. The method of claim 1 or claim 2, wherein the wall of said segment is made thin enough for the carbon to diffuse therethrough and to be exhausted by the reducing gas.

4. The method of claim 1, wherein a mixture containing N₂ and at least one of the components taken from the group comprising H₂, H₂O, and CO₂ is used as the reducing gas.

5. Method according to any one of the claims 1 to 4, wherein this method is carried out continuously, the decarburization of the conductor by a regulated flow of reducing gas being carried out continuously.

6. The method according to any one of the claims 1 to 6, wherein this method is carried out cyclically, a flow of reducing gas being controlled in a way to effect decarburization of the wall of the tubular conductor during intermittent periods of limited duration.

7. A probe for carrying out the method according to any one of the claims 1 to 6, characterized by a tubular detector in a ferrous metal having a U-shape, the two ends of which pass through a core of insulating material and are connected, on the one hand, electrically to a voltage source by a connection which crosses an instrument for measuring electrical resistance, and, on the other hand, with regard to the flow of the fluids, to means for supplying a reducing gas and to means for exhausting said reducing gas.

8. The probe of claim 7 wherein the two arms of the U-shaped tubular conductor are encased in a sleeve of protective insulating material, the U-bend taking the form of a serpentine-shaped or a solenoid-shaped conductor segment which is exposed to the atmosphere of the furnace.

9. The probe of claim 7, wherein the two arms of the U-shaped tubular conductor are coated externally with a layer of copper within the sleeve of insulating material.
